# EUROPEAN PATENT SPECIFICATION

(11) **EP 3 276 764 B1**
(45) Date of publication and mention of the grant of the patent: **07.08.2019**
(21) Application number: 16772348.5
(22) Date of filing: 17.03.2016
(51) Int. Cl.: H02B 13/035, H01H 33/59, H02B 13/00, H01H 9/54, H01H 33/666

(54) **DC CIRCUIT BREAKER DEVICE AND METHOD FOR CONTROLLING SAME**
GLEICHSTROMSCHUTZSCHALTERVORRICHTUNG UND VERFAHREN ZUR STEUERUNG DAVON
DISPOSITIF DISJONCTEUR POUR COURANT CONTINU ET SON PROCÉDÉ DE COMMANDE

(30) Priority: 27.03.2015 JP 2015067075
(43) Date of publication of application: 31.01.2018
(73) Proprietor: Kabushiki Kaisha Toshiba, Minato-ku Tokyo 105-8001 (JP)
(72) Inventor: KANAYA, Kazuhisa, Tokyo 105-8001 (JP); OHDA, Yoshiaki, Tokyo 105-8001 (JP); HASEGAWA, Ryuta, Tokyo 105-8001 (JP); MATSUMOTO, Toshiaki, Tokyo 105-8001 (JP); NAKAMOTO, Tetsuya, Tokyo 105-8001 (JP); IIO, Naotaka, Tokyo 105-8001 (JP)
(74) Representative: AWA Sweden AB
(86) International application number: PCT/JP2016/058563
(87) International publication number: WO 2016/158465

(56) References cited:
- WO-A1-2013/131580
- WO-A1-2013/131581
- DE-A1-102011 083 514
- JP-A- S5 970 107
- JP-A- 2001 189 118
- JP-A- 2015 534 235
- US-A- 4 458 119
- US-A1- 2012 299 393

## Description

### Technical Field

The embodiments of the present invention relate to a direct-current interrupting device and the control method thereof.

### Background Art

Direct-current transmission has high facility costs in comparison to alternating-current transmission, but is efficient in power transmission. For long-distance power transmission or undersea power transmission in particular, direct-current transmission is more efficient. Accordingly, in consideration of long-term operation, the low operation cost compensates for the high facilities cost, whereby direct-current transmission can be at a lower cost. Due to this, direct-current transmission has been used for the power transmission between two bases. Recently, it is requested that the ratio of the power generated by renewable energy in relation to the overall generated power be increased to provide a greater amount of power by renewable energy. Thus, a method for generating power on a large scale in a location far away from an urban area, which is a major power consuming area, by use of wind-power generation on the ocean, solar-power generation in a desert area, etc. and transmitting the power over a long distance is being considered. Along with this, construction of a direct-current transmission network connecting a plurality of power-providing points and a plurality of areas demanding power is planned.

To construct a power-transmission network connecting three or more bases, a device is needed which can immediately isolate the accident point from a healthy system when an accident occurs in the power-transmission network. Generally, a mechanical breaker is used in an alternating-current system. This mechanical breaker opens contacts at current-zero points generated by alternating current and sprays an insulating medium to the arc current between the contacts, thereby blocking an accident current. In contrast, it has been said that it is difficult for a conventional mechanical breaker to immediately block an accident current since no current-zero point occurs in an accident current in a direct-current transmission system.

Thus, as a semiconductor breaker that can independently block direct current, a semiconductor breaker using a plurality of self-excited semiconductor elements having a self-arc-extinguishing ability such as IGBTs (Insulated Gate Bipolar Transistor) is suggested. However, because all the transmitted power always passes through a plurality of self-excited semiconductor elements, a large conduction loss is caused and the efficiency of power transmission at the time of normal operation is decreased.

To resolve this problem, a hybrid breaker made by connecting another semiconductor breaker in parallel to a circuit in which a mechanical-contact-type disconnecting switch and an auxiliary semiconductor breaker are connected in series is suggested. In this hybrid breaker, at the time of regular power transmission, the mechanical-contact-type disconnecting switch and the auxiliary semiconductor breaker are in a conduction state, and the other semiconductor breaker is in a blocking state. Accordingly, transmission current flows through the mechanical-contact-type disconnecting switch and the auxiliary semiconductor breaker.

In addition, when an accident occurs, the auxiliary semiconductor breaker is set to be in a blocking state, and at the same time, the mechanical-contact-type disconnecting switch is given an opening command. The accident current that flows along the path of the mechanical-contact-type disconnecting switch and the auxiliary semiconductor breaker due to the blocking state of the auxiliary semiconductor breaker as above is transferred to the other semiconductor breaker. By blocking the other semiconductor breaker after the opening operation of the mechanical-contact-type disconnecting switch is completed and the withstand voltage of the regular current-carrying path is secured, blocking of the accident current is completed.

The conduction loss at the time of regular current-carrying of such a hybrid breaker is only the conduction loss of the auxiliary semiconductor breaker. Due to this, conduction loss can be reduced in comparison to the configuration of setting a regular current-carrying path only as a semiconductor breaker that can independently block direct current as written above. However, a current-carrying loss of the auxiliary semiconductor breaker occurs. Due to this, compared to the conduction loss of a traditional mechanical breaker, whose regular current-carrying path is composed of only mechanical contacts, the conduction loss of the hybrid breaker is large.

Thus, a direct-current interrupting device, made by connecting in parallel a mechanical breaker to a circuit in which a semiconductor breaker and a transferring circuit composed of half-bridge circuits are connected in series, is suggested.

In this direct-current interrupting device, at the time of regular power transmission, the mechanical-contact-type disconnecting switch is in a conduction state, and the semiconductor breaker and the transferring circuit are in a blocking state. Accordingly, transmission current at the time of regular power transmission flows through only the mechanical-contact-type disconnecting switch.

In addition, when an accident occurs, the mechanical-contact-type disconnecting switch is given an opening command, the semiconductor breaker is set to be in a conduction state, and the transferring circuit is given a transferring command. Then, the transferring circuit generates zero points in the current flowing through the mechanical breaker by sending current in the direction opposite to the accident current flowing through the mechanical breaker. This mechanical breaker is opened, whereby the accident current transfers from the mechanical breaker to the semiconductor breaker and the transferring circuit. After the accident current is transferred, the semiconductor breaker is blocked, whereby blocking of the accident current is completed.

In such a direct-current interrupting device, the regular current-carrying path is composed of only a mechanical breaker. Therefore, conduction loss can be greatly reduced.

### [Prior Art Reference]

### [Patent Literature]

[Patent Literature 1]
   International Publication No. 2011/057675
[Patent Literature 2]
   International Publication No. 2013/131582

However, the above direct-current interrupting device needs a lot of components, such as a mechanical breaker, a semiconductor breaker, and a transferring circuit. Due to this, the device and a building for housing the device may grow in size, and the costs for constructing the building may increase. In addition, to withstand the large operation power of a mechanical-contact-type switch and a few to dozens of tons of the deadweight of a semiconductor breaker, the foundation for setting a direct-current interrupting device needs to be strong. Accordingly, the increase of the setting area of a direct-current interrupting device is directly connected to increased costs.

Furthermore, when wind-power generation on the ocean is conducted, the power generated by a windmill set on the ocean is converted into direct current at a converter station on a base on the ocean in the same manner and transmitted to land via a direct-current interrupting device in a substation. The costs for constructing this ocean base are significantly high; thus, decreasing the area of this ocean base greatly contributes to cost reduction. Accordingly, regarding a direct-current interrupting device, which is a component equipment of a converter station or a substation, its setting area is also required to be reduced. The document "US 4 458 119 A" discloses a direct-current interrupting device according to the preamble of claim 1.

### Brief Description of Drawings

FIG. 1 is an elevation showing an example of the overall configuration of the direct-current transmitting device in the first embodiment.
FIG. 2 is a side elevation showing an example of the overall configuration of the direct-current transmitting device in the first embodiment.
FIG. 3 is a section view of a partially-enlarged view of the mechanical breaker of the direct-current transmitting device in the first embodiment.
FIG. 4 is a section view showing a configuration example of the semiconductor module of the direct-current transmitting device in the first embodiment.
FIG. 5 is a circuit diagram showing an example of the connection relation among the transferring circuit, semiconductor breaker, and mechanical breaker of the direct-current transmitting device in the first embodiment.
FIG. 6 is a section view showing a configuration example of the commutation circuit module of the direct-current transmitting device in the first embodiment.
FIG. 7 is a figure showing a circuit configuration example of the half-bridge circuit of the direct-current transmitting device in the first embodiment.
FIG. 8 is an elevation showing an example of the overall configuration of the direct-current interrupting device in the second embodiment.
FIG. 9 is a side elevation showing an example of the overall configuration of the direct-current interrupting device in the second embodiment.
FIG. 10 is a circuit diagram showing an example of the connection relation among the transferring circuit, semiconductor breaker, and mechanical breaker of the direct-current transmitting device in the second embodiment.
FIG. 11 is a section view of a partially-enlarged view of the mechanical breaker in the second embodiment.

### Mode for Carrying Out the Invention

According to the embodiments, the direct-current interrupting device comprises a mechanical breaker, a semiconductor breaker, and a commutation device. The mechanical breaker comprises a mechanical contact made by connecting at least one high-voltage contact and at least one current interrupting contact in series, a cylindrical pressure vessel, and bushings connected to the pressure vessel. The pressure vessel internally encapsulates the mechanical contact, and is equipotential to the ground potential. The bushings withdraw conductors from both ends of the mechanical contact to the outside of the pressure vessel, and connect each of the conductors to a direct-current transmission system. The semiconductor breaker comprises semiconductor modules, module supporting plates, and insulating poles. The semiconductor module comprises a semiconductor stack made by layering two or more self-excited semiconductor elements in line and connecting them in series, an auxiliary circuit of the semiconductor stack, and an insulation supporting unit. The insulation supporting unit electrically insulates the semiconductor stack and the auxiliary circuit against the module supporting plate, and mechanically connects the semiconductor stack and the auxiliary circuit to the module supporting plate. The insulating pole mechanically supports or fixes the module supporting plate. The semiconductor breaker is connected to the mechanical breaker in parallel. The commutation device is connected to at least the high-voltage contact of the high-voltage contact and the current interrupting contact of the mechanical breaker in parallel, and is connected to the semiconductor breaker in series. At the time of regular power transmission of the direct-current transmission system, transmission current flows through only the mechanical breaker. When an accident current occurs in the direct-current transmission system, the direct-current interrupting device opens the path of the high-voltage contact and the current interrupting contact of the mechanical breaker to make the self-excited semiconductor elements of the semiconductor breaker in a current-carrying state, and to make the current flowing through the current interrupting contact temporarily zero by the commutation device, thereby transferring the accident current from the mechanical breaker to the semiconductor breaker. The direct-current interrupting device makes the self-excited semiconductor elements of the semiconductor breaker in a blocking state after the accident current is transferred, thereby blocking the accident current of the direct-current transmission system.

Hereinafter, embodiments will be explained by use of the drawings.

### (First Embodiment)

### [1-1. Configuration]

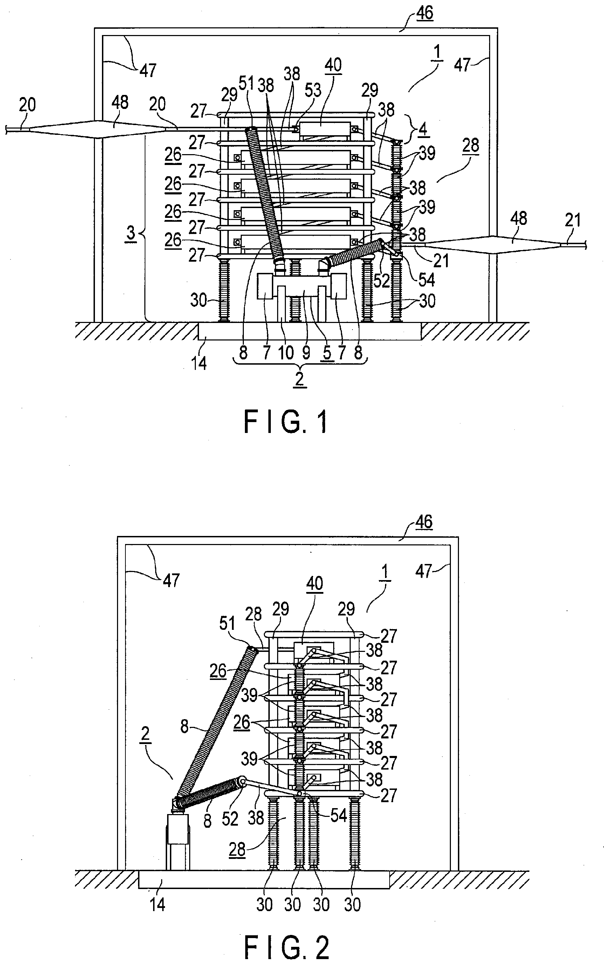

First, the configuration of the direct-current interrupting device in the first embodiment will be explained with reference to FIGS. 1-6.

FIGS. 1 and 2 are figures showing the overall configuration of the direct-current interrupting device in the first embodiment. Specifically, FIG. 1 is an elevation showing an example of the overall configuration of the direct-current transmitting device in the first embodiment. FIG. 2 is a side elevation showing an example of the overall configuration of the direct-current transmitting device in the first embodiment.

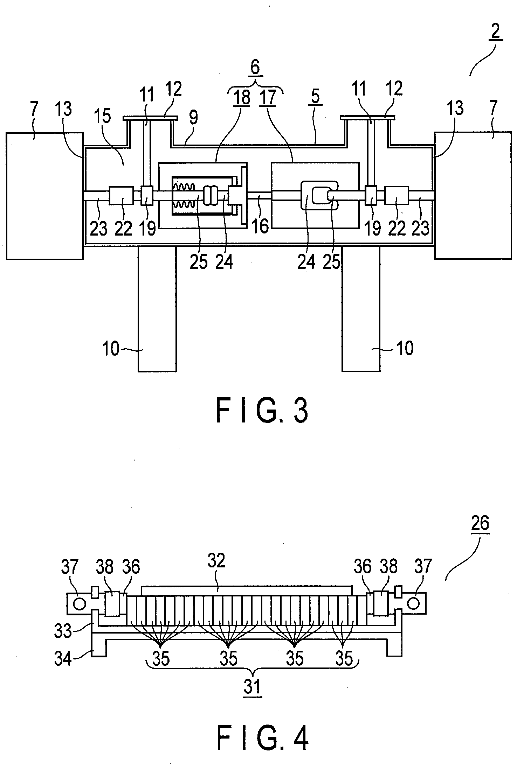

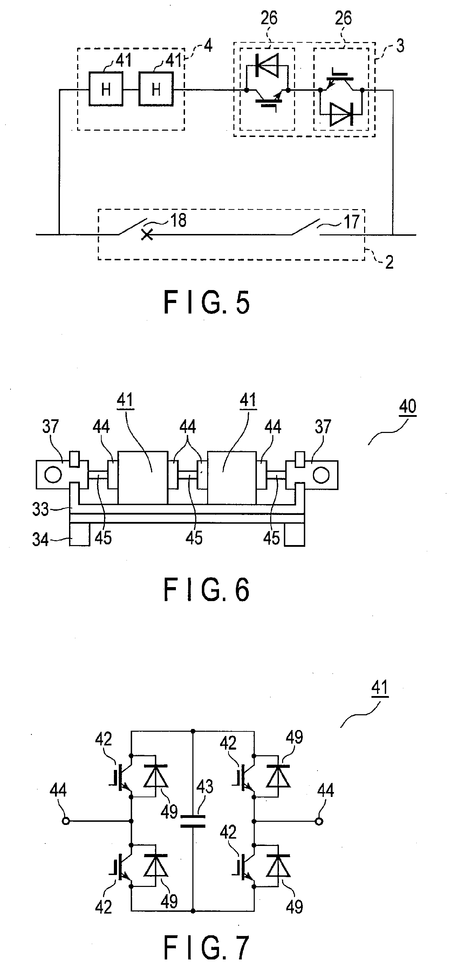

FIG. 3 is a section view of a partially-enlarged view of the mechanical breaker of the direct-current transmitting device in the first embodiment. FIG. 4 is a section view showing a configuration example of the semiconductor module of the direct-current transmitting device in the first embodiment. FIG. 5 is a circuit diagram showing an example of the connection relation among the transferring circuit, semiconductor breaker, and mechanical breaker of the direct-current transmitting device in the first embodiment.

A direct-current interrupting device 1 in the first embodiment comprises a mechanical breaker 2, a semiconductor breaker 3, and a commutation device 4. As shown in FIGS. 1, 2, and 5, the mechanical breaker 2 is electrically connected to the series circuit of the semiconductor breaker 3 and the commutation device 4 in parallel, and electrically connected to direct-current transmission lines (direct-current transmission system) 20 and 21, and carries power-interchanging current in a regular state.

### (Mechanical breaker 2)

The mechanical breaker 2 comprises a pressure vessel 5, operation mechanisms 7, and bushings 8. A mechanical contact 6 is encapsulated in the pressure vessel 5.

The pressure vessel 5 comprises a cylindrical metal tank 9, fixed legs 10 for supporting the metal tank 9 in a foundation 14 for setting a current interrupting device, two openings 12 for extending conductors 11 from the metal tank 9, and connecting units 13 for connection to the operation mechanisms 7. The metal tank 9 is fixed to the foundation 14 by the fixed legs 10, and electrically equipotential to the ground potential.

The bushings 8 are connected to the openings 12, which extend the conductors 11. In the connecting units 13 with the operation mechanisms 7, non-illustrated sealing portions are provided. Thus, the inside of the pressure vessel 5 is hermetically sealed.

In the metal tank 9 of the pressure vessel 5 as described, an insulating medium 15 is filled. This insulating medium 15 can be sulfur hexafluoride gas (SF6 gas), carbon dioxide, nitrogen, dry air, mixed gas thereof, and insulating oil, for example. In the first embodiment, SF6 gas is filled in the metal tank 9 as the insulating medium 15.

The mechanical contact 6 comprises a gas contact 17, which is a high-voltage contact, and a vacuum interrupter 18, which is a current interrupting contact. The gas contact 17 and vacuum interrupter 18 are encapsulated in the metal tank 9, in which the insulating medium 15 is filled, of the pressure vessel 5, fixed in the metal tank 9 with a non-illustrated insulator, and electrically insulated against the pressure vessel 5.

The gas contact 17 and the vacuum interrupter 18 are electrically connected to each other in series via a conductor 16. The end on the side of the vacuum interrupter 18 in the mechanical contact 6 is guided to the first opening 12 via a first sliding contact 19, and the conductor 11 is electrically connected to this sliding contact 19, and is electrically connected to a terminal 51 at the tip of the bushing 8. The end on the side of the gas contact 17 in the mechanical contact 6 is guided to the second opening 12 via a second sliding contact 19, and the conductor 11 is electrically connected to this sliding contact 19. This end is electrically connected to a terminal 52 at the tip of the bushing 8.

This terminal 51 is electrically connected to a terminal 53 on the side of the commutation device 4 of the circuit made by electrically connecting the semiconductor breaker 3 and the commutation device 4 in series . This terminal 53 is electrically connected to a direct-current transmission line 20 via a conductor 38 for the terminal 53. The terminal 52 is electrically connected to a terminal 54 on the side of the semiconductor breaker 3 of the circuit made by electrically connecting the semiconductor breaker 3 and the commutation device 4 in series. This terminal 54 is electrically connected to a direct-current transmission line 21 via the conductor 38 for the terminal 54.

Furthermore, the gas contact 17 is connected to the first operation mechanism 7 outside the pressure vessel 5 via a first insulating rod 22, which is made of an insulating material, and a first seal rod 23, which is made of a metallic material, maintaining the airtightness in the pressure vessel 5. The vacuum interrupter 18 is connected to the second operation mechanism 7 outside the pressure vessel 5 via a second insulating rod 22 and a second seal rod 23, maintaining the airtightness in the pressure vessel 5.

The operation mechanisms 7 are fixed in the connecting unit 13 at one end of the pressure vessel 5, and the connecting unit 13 at the other end of the pressure vessel 5, respectively. Non-illustrated driving gears in the operation mechanisms 7 are connected to the seal rods 23. These driving gears are driven to make a movable contact 25 in the gas contact 17 contacted with or away from a fixed contact 24 on the side of the conductor 16 in the gas contact 17. The driving gears are driven to make a movable contact 25 in the vacuum interrupter 18 contacted with or away from a fixed contact 24 on the side of the conductor 16 in the vacuum interrupter 18. In this way, the driving gears conduct opening and closing operations of the gas contact 17 and the vacuum interrupter 18.

One end of the bushing 8 is fixed in the pressure vessel 5 at an angle in the axial direction of this bushing 8, with reference to the vertical direction of the foundation 14, which is the setting surface of the mechanical breaker 2. This bushing 8 is disposed so that the top end of the bushing 8 is close to the semiconductor breaker 3, within the scope of being able to secure an insulation distance from the other parts at the time of blocking.

### (Semiconductor breaker 3)

As shown in FIG. 2 etc., the semiconductor breaker 3 comprises semiconductor modules 26, module supporting plates 27, surge arrester units 28, and insulating poles 29 and 30.

In addition, as shown in FIG. 4, the semiconductor module 26 comprises a semiconductor stack 31, the auxiliary circuit 32 of the semiconductor stack 32, a storage vessel 33, and an insulation supporting unit 34.

The semiconductor stack 31 is comprised by connecting two or more self-excited semiconductor elements such as IGBTs or IEGTs (injection enhanced gate transistor) (hereinafter referred to as "IGBTs 35") in series. By layering these IGBTs 35 in line and compressing both ends thereof, the contact resistance of the connecting unit of each IGBT 35 can be reduced.

The auxiliary circuit 32 is connected to the semiconductor stack 31. This auxiliary circuit 32 comprises a diode, a snubber circuit, and a gate unit. This diode makes current pass in the direction opposite to the current-carrying direction of the IGBTs 35. The above snubber circuit equalizes the voltage distribution among the IGBTs 35. The above gate unit outputs a switching command to the IGBTs 35.

The semiconductor stack 31 and auxiliary circuit 32 are put in the storage vessel 33, which is an insulator. Also, when the semiconductor stacks 31 connected in series are regarded as one semiconductor stack, it is possible to electrically connect terminals 36 at both ends of this semiconductor stack, and terminals 37 connected to both ends of the storage vessel 33, by conductors 38 in the form of compression springs for the inside of the semiconductor module 26. In such a way, the terminals 36 and the terminals 37 conduct electricity with each other, reducing the contact resistance among the IGBTs 35 by compressing the semiconductor stack 31.

The insulation supporting unit 34 is mechanically connected to the bottom of the storage vessel 33. In the embodiments of the present invention, maintaining the insulation distance between the semiconductor module 26 comprising this insulation supporting unit 34, and the module supporting plate 27 supporting this semiconductor module 26, the semiconductor module 26 can be fixed in the module supporting plate 27.

In addition, by electrically connecting the terminals 37 of the storage vessels 33 for the semiconductor modules 26 by the conductors 38 for connecting the semiconductor modules 26, the semiconductor modules 26 are connected in series. When the semiconductor modules 26 connected in series are regarded as one module, one terminal 37 of this one module is electrically connected to a commutation circuit module 40 via the conductor 38 for connection to the commutation circuit module 40. The other terminal 37 of the above one module is electrically connected to the gas contact 17 of the mechanical breaker 2 via the conductor 38 for connection to the mechanical breaker 2 and the terminal 54.

It was explained that in the first embodiment, the semiconductor stack 31 and the auxiliary circuit 32 of the semiconductor module 26 were put in the storage vessel 33, and then the semiconductor module 26 was fixed in the module supporting plate 27 via the insulation supporting unit 34. However, the semiconductor module 26 not limited to this, and may also be directly fixed in the module supporting plate 27 via the insulation supporting unit 34, without putting the semiconductor stack 31 and the auxiliary circuit 32 in the storage vessel 33.

The module supporting plate 27 is mechanically fixed in the insulating poles 29 made of FRP (fiber reinforced plastic) . In this way, the insulation distance between the module supporting plates 27 can be maintained, and also the insulation distance between the module supporting plate 27 and the semiconductor module 26 supported by this module supporting plate 27 can be maintained. Besides, the gap between the module supporting plate 27 supporting the lowest semiconductor module 26 and the foundation 14 is supported by the insulating poles 30 made of insulators. In this way, the insulation distance between the lowest module supporting plate 27 and the foundation 14 can be maintained.

As shown in FIGS. 1 and 2, in the first embodiment, four semiconductor modules 26 are stacked in the vertical direction. The number of the semiconductor modules 26 to be stacked may be one or more, and is not particularly limited. In the first embodiment, one module supporting plate 27 supports one semiconductor module 26. This one module supporting plate 27 may support two or more semiconductor modules 26.

As shown in FIG. 1, the surge arrester unit 28 of the semiconductor breaker 3 is composed of a plurality of surge arresters 39 and the insulating pole 30 for the surge arrester unit 28. The surge arresters 39 are set by being axially stacked on the insulating pole 30 for the surge arrester unit 28. The surge arresters 39 are connected in series. Also, each of the surge arresters 39 is connected to the semiconductor module 26 in parallel via the conductor 38 for the surge arrester unit 28.

The insulating poles 29 and 30 are used to mechanically connect a plurality of members, electrically insulating the members. As above, in the first embodiment, the insulating poles 29 made of FRP and the insulating poles 30 made of insulators are used. It is possible to use one of FRP and insulators, or other materials, for the insulating poles 29 and 30.

### (Commutation device 4)

As shown in FIGS. 1 and 2, the commutation device 4 comprises the commutation circuit module 40 and the module supporting plate 27 for this commutation circuit module 40. This module supporting plate 27 is mechanically fixed in the insulating pole 29 explained as being comprised by the semiconductor breaker 3. Also as shown in FIGS. 1 and 2, the module supporting plate 27 covering the top of the commutation circuit module 40 may be mechanically fixed in the top ends of the insulating poles 29. That is, in the first embodiment, the semiconductor breaker 3 and the commutation device 4 share the insulating poles 29, and these insulating poles 29 can be configured as one structure extending over the semiconductor breaker 3 and the commutation device 4.

FIG. 6 is a figure showing a configuration example of the section view of the commutation circuit module of the direct-current transmitting device in the first embodiment. As shown in FIG. 6, the commutation circuit module 40 comprises half-bridge circuits (hereinafter referred to as "H-bridge circuits 41"), the storage vessel 33 for the commutation circuit module 40, and the insulation supporting unit 34 for the commutation circuit module 40.

FIG. 7 is a figure showing a circuit configuration example of the half-bridge circuit of the direct-current transmitting device in the first embodiment.

As shown in FIG. 7, the H-bridge circuit 41 is configured by connecting two legs made by connecting two self-excited semiconductor elements (hereinafter referred to as "IGBTs 42") in series, and a capacitor 43 in parallel, and functions as an inverter. To the IGBT 42 of the H-bridge circuit 41, a diode 49 is connected in anti-parallel. This diode makes current pass in the direction opposite to the current-carrying direction of the IGBT 42.

As shown in FIG. 6, in the first embodiment, two H-bridge circuits 41 are connected in series and put in the storage vessel 33. As shown in FIG. 7, in the H-bridge circuit 41, each of the legs comprises a terminal 44 withdrawn from the gap between the two IGBTs 42. By connecting one terminal 44 of the first H-bridge circuit 41 and one terminal 44 of the second H-bridge circuit 41 by a conductor 45, the two H-Bridge circuits 41 can be connected in series.

In addition, when a circuit comprised by connecting the two H-bridge circuits 41 in series as above is regarded as one circuit, by electrically connecting the terminal 44 of this circuit and the terminal 37 connected to the end of the storage vessel 33 by the conductor 45, the terminal 44 and the terminal 37 can conduct electricity with each other.

The insulation supporting unit 34 for the commutation circuit module 40 is mechanically connected to the bottom of the storage vessel 33 for the commutation circuit module 40. In this way, by maintaining the insulation distance between the commutation circuit module 40 and the module supporting plate 27 for the commutation circuit module 40, the commutation circuit module 40 can be fixed in the module supporting plate 27.

As shown in FIGS. 1-3 and 6, the terminal 37 of one end of the storage vessel 33 for the commutation circuit module 40 is electrically connected to the vacuum interrupter 18 of the mechanical breaker 2 via the conductor 38 for connection to the mechanical breaker 2. The other terminal 37 is electrically connected to the semiconductor breaker 3 via the conductor 38 for connection to the semiconductor breaker 3.

In the first embodiment, the H-bridge circuits 41 are put in the storage vessel 33 for the commutation circuit module 40, and then these H-bridge circuits 41 are fixed in the module supporting plate 27 via the insulation supporting unit 34. However, as another way, without being put in the storage vessel 33, the H-bridge circuits 41 may be directly fixed in the module supporting plate 27 via the insulation supporting unit 34.

As shown in FIGS. 1 and 2, the module supporting plate 27 fixing the commutation circuit module 40 is mechanically fixed in the insulating pole 29 of the semiconductor breaker 3. In this way, the insulation distance between the module supporting plates 27 or the insulation distance between the module supporting plate 27 and the commutation circuit module 40 can be maintained.

### (Construction in a building)

In consideration of serviceability, or prevention of the degradation in insulation performance by damage, as shown in FIGS. 1 and 2, the direct-current interrupting device 1 configured as above is set in a building 46. This direct-current interrupting device 1 is disposed in a location so that the insulation distance between high-voltage units and a wall surface 47 of the building 46 can be fully maintained. These high-voltage units are the top end of the bushing 8 of the mechanical breaker 2, the semiconductor breaker 3, the commutation device 4, etc.

The mechanical breaker 2 is disposed on the side surface whose area is wider among the side surfaces of the semiconductor breaker 3 so that this side surface and the axial direction of the pressure vessel 5 are in parallel. The mechanical breaker 2 is also disposed so that the distance between this mechanical breaker 2 and the semiconductor breaker 3 gets shorter within the scope of being able to maintain the insulation distance.

As shown in FIG. 1, the direct-current transmission lines 20 and 21 connected to the direct-current interrupting device 1 are guided to the outside of the building 46 via bushings 48 fixed in the wall surface 47 of the building 46, maintaining the insulation distance from the wall surface 47.

### [1-2. Operations]

The operations of the direct-current interrupting device in the first embodiment as above will be explained. In a regular state before an accident occurs in the direct-current transmission line 20 or 21, current flows along the path of the direct-current transmission line 20, the mechanical breaker 2 and the direct-current transmission line 21, and direct-current power is transmitted. This current passes through only the mechanical contact 6 whose resistance is significantly low. Due to this, conduction loss is significantly low, and power transmission can be highly efficiently performed.

However, if an accident occurs in the direct-current transmission line 21, a non-illustrated controller of the direct-current interrupting device 1 detects the occurrence of the accident by detecting an increase of current. Then, the controller gives the command to open the path of the vacuum interrupter 18 and the gas contact 17 to the operation mechanisms 7 of the mechanical breaker 2. The controller also gives the command to turn on the IGBTs 35 (current-carrying state) to the auxiliary circuit 32 of the semiconductor breaker 3.

If the command to open the path of the vacuum interrupter 18 and the gas contact 17 is given, the controller gives the command to discharge the charges of the capacitor 43 to the auxiliary circuit 32 of the commutation device 4 by the H-bridge circuit 41. Then, current flows along the path of the commutation device 4, the semiconductor breaker 3, the mechanical breaker 2 and the direct-current transmission line 20. This current flows in the direction opposite to the accident current. Due to this, a zero point occurs in the current flowing through the mechanical breaker 2, and the current flowing through the mechanical breaker 2 is blocked by the vacuum interrupter 18.

Then, the accident current is transferred along the path of the direct-current transmission line 20, the commutation device 4, the semiconductor breaker 3, and the direct-current transmission line 21. Accordingly, after the gas contact 17 of the mechanical breaker 2 completes the path-opening operation, and a sufficient withstand voltage for the transient recovery voltage at the time of blocking an accident is secured, the controller blocks the current flowing through the semiconductor breaker 3 by giving the command to turn off the IGBTs 35 (blocking state) to the auxiliary circuit 32 of the semiconductor breaker 3 of the direct-current interrupting device 1.

Once the current flowing through the semiconductor breaker 3 is blocked, a high transient recovery voltage, which is equal to or greater than a one-and-a-half rated voltage, occurs at both ends of the semiconductor breaker 3. This voltage exceeds the clamping voltage of the surge arrester 39 connected to the semiconductor breaker 3 in parallel. Thus, the accident current is transferred along the path of the direct-current transmission line 20, the surge arrester 39, and the direct-current transmission line 21. This accident current continues flowing through the surge arrester 39. In addition, the energy accumulated in the direct-current transmission lines 20 and 21, or the energy accumulated in a non-illustrated reactor electrically connected to the direct-current transmission lines 20 and 21, is consumed in the surge arrester 39. Due to this, the accident current ultimately becomes zero.

By carrying out those operations, the direct-current interrupting device 1 completes blocking of the accident current.

### [1-3. Advantageous effects]

The direct-current interrupting device in the first embodiment as described above can lower conduction loss and reduce setting capacitance and a setting area, thereby reducing the costs for constructing a building and a foundation. Specifically, the advantageous effects are as follows:
(1) In a regular state, power-interchanging current flows through only the mechanical breaker 2 whose resistance is significantly low. Because of this, conduction loss can hardly occur. Thus, the highly-efficient direct-current interrupting device 1 can be provided.
(2) When the bushing 8 is disposed in the direction vertical to the flat plate of the foundation 14, the gap between the pressure vessel 5 in the mechanical breaker 2 and the wall surface 47 of the building 46 needs to be longer than the insulation distance between the top end of the bushing 8 and the wall surface 47.
   In contrast, in the first embodiment, the bushing 8 is made inclined to the vertical direction of the foundation 14, and disposed so that the top end of the bushing 8 is close to the semiconductor breaker 3. Only by the distance of making the top end of the bushing 8 close to the semiconductor breaker 3, the distance between the pressure vessel 5 and the wall surface 47 can be shortened. This makes it possible to reduce the scale of the building 46 and the area of the foundation 14, which generates cost reduction effects.
(3) In the first embodiment, the mechanical breaker 2 is disposed on the side surface whose area is wider among the side surfaces of the semiconductor breaker 3 so that this side surface and the axial direction of the pressure vessel 5 are in parallel. The mechanical breaker 2 is also disposed so that the distance between the mechanical breaker 2 and the semiconductor breaker 3 gets shorter within the scope of being able to maintain the insulation distance. This makes it possible to shorten the distance between the pressure vessel 5 and the wall surface 47, thereby reducing the scale of the building 46 and the area of the foundation 14, which generates cost reduction effects.
(4) In the first embodiment, the semiconductor modules 26 are disposed to be layered, and in addition, the semiconductor breaker 3 and the commutation device 4 share the insulating poles 29, and these are configured as one structure. Due to this, the setting area of the direct-current interrupting device 1 can be small.

Accordingly, since it becomes possible to reduce the area of the foundation 14 in which the direct-current interrupting. device 1 is set and the scale of the building 46, which generates cost reduction effects.

### (Second Embodiment)

Next, the second embodiment will be explained.

### [2-1. Configuration]

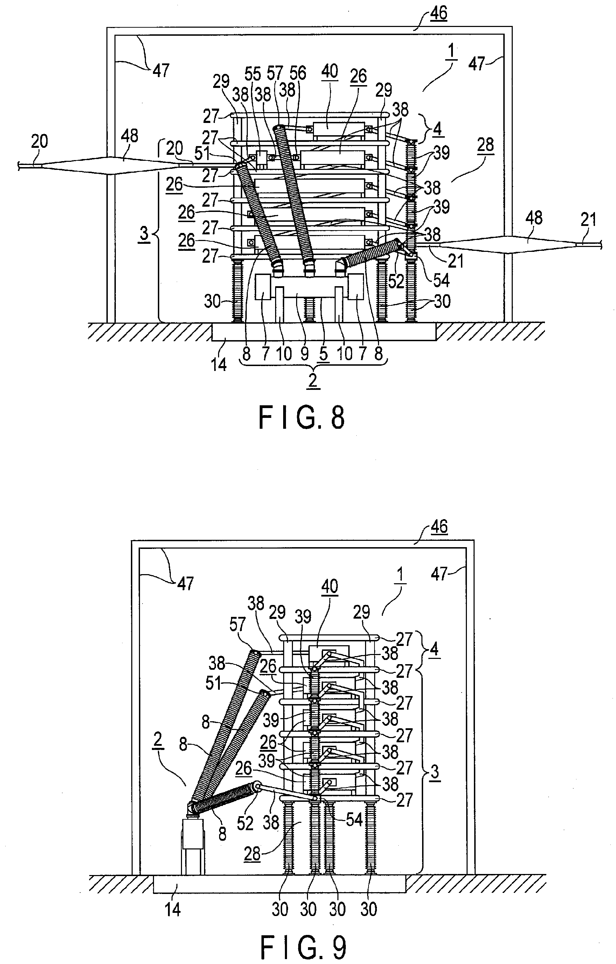

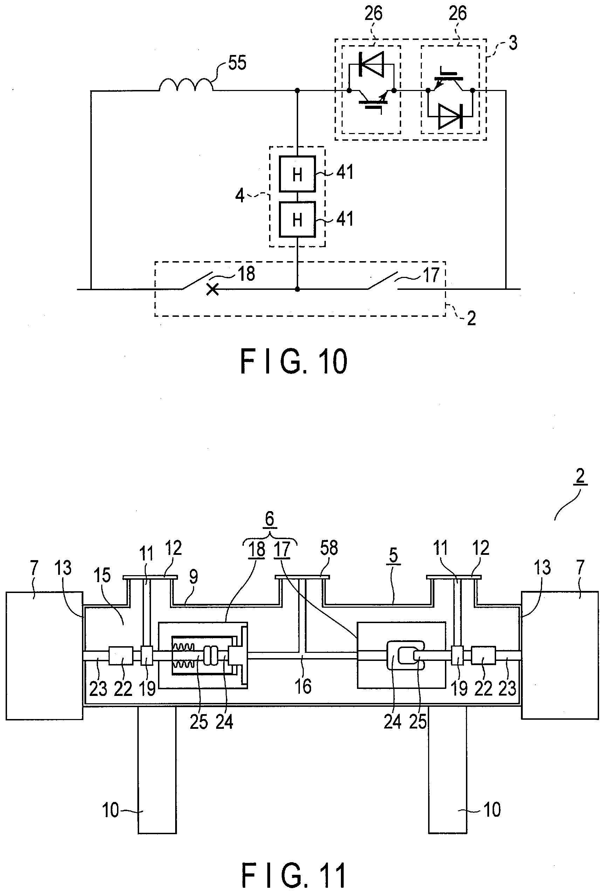

The configuration of the direct-current interrupting device in the second embodiment will be explained with reference to FIGS. 8-11. FIGS. 8 and 9 are figures showing the overall configuration of the direct-current interrupting device in the second embodiment. Specifically, FIG. 8 is an elevation showing an example of the whole configuration of the direct-current interrupting device in the second embodiment. FIG. 9 is a side elevation showing an example of the overall configuration of the direct-current interrupting device in the second embodiment. FIG. 10 is a circuit diagram showing an example of the connection relation among the transferring circuit, semiconductor breaker, and mechanical breaker of the direct-current transmitting device in the second embodiment. FIG. 11 is a section view of a partially-enlarged view of the mechanical breaker of the direct-current transmitting device in the second embodiment.

Most of the configuration in the second embodiment is the same as the configuration in the first embodiment. Accordingly, only those parts different from the first embodiment will be explained by applying the same codes to those portions that are the same as in the first embodiment, and detailed explanations thereof will be omitted.

The second embodiment differs from the first embodiment in that the connection location of the commutation device 4 is different and there is a commutation adjustment reactor 55.

As shown in FIGS. 8-10, the commutation adjustment reactor 55 is connected between the terminal 51 and a terminal 56, which is the connection point on the side of the vacuum interrupter (current interrupting contact) 18 of the connection points of the mechanical breaker 2 and the semiconductor breaker 3, which are connected in parallel. The terminal 56 is the connection point of the semiconductor breaker 3 and the commutation adjustment reactor 55. The commutation circuit module 40 of the commutation device 4 is electrically connected between a terminal 57 and the terminal 56. The terminal 57 is a terminal that withdrew the connection point of the gas contact 17 and the vacuum interrupter 18 of the mechanical breaker 2 via the bushing 8.

The connection point of the gas contact 17 and the vacuum interrupter 18 are guided to the opening 58 of the pressure vessel 5. This connection point is electrically connected to the terminal 57 of the tip of the bushing 8 connected to the opening 58.

### [2-2. Operations]

The operations of the direct-current interrupting device in the second embodiment as above will be explained.

In a regular state before an accident occurs in the direct-current transmission line 20 or 21, current flows along the path of the direct-current transmission line 20, the mechanical breaker 2, and the direct-current transmission line 21, and direct-current power is transmitted. This current passes through only the mechanical contact 6 whose resistance is significantly low. Due to this, conduction loss is significantly low, and power transmission can be highly efficiently performed.

However, if an accident occurs in the direct-current transmission line 21, a non-illustrated controller of the direct-current interrupting device 1 detects the occurrence of the accident by detecting an increase of current. This controller gives the command to open the path of the vacuum interrupter 18 and the gas contact 17 to the operation mechanisms 7 of the mechanical breaker 2. This controller also gives the command to turn on the IGBTs 35 (current-carrying state) to the auxiliary circuit 32 of the semiconductor breaker 3.

If the non-illustrated controller of the direct-current interrupting device 1 gives the command to open a path to the operation mechanisms 7 of the mechanical breaker 2, at the same time, the non-illustrated controller gives the command to discharge the charges of the capacitor 43 to the auxiliary circuit 3 of the commutation device 4 by the H-bridge circuit 41. Then, current flows along the path of the commutation adjustment reactor 55, the commutation device 4, and the vacuum interrupter 18. This current flows in the direction opposite to the accident current. Due to this, a zero point occurs in the current flowing through the vacuum interrupter 18 of the mechanical breaker 2, and the current flowing through the vacuum interrupter 18 is blocked by opening the path of the vacuum interrupter 18 as above. Then, the accident current is transferred along the path of the direct-current transmission line 20, the commutation adjustment reactor 55, the commutation device 4, the gas contact 17 of the mechanical breaker 2, and the direct-current transmission line 21.

Next, the non-illustrated controller of the direct-current interrupting device 1 gives the command to block the gate of the four IGBTs 42 comprising the H-bridge circuit 41 to the auxiliary circuit 32 of the commutation device 4. Then, the accident current is transferred along the path of the direct-current transmission line 20, the commutation adjustment reactor 55, the semiconductor breaker 3, and the direct-current transmission line 21. Since the accident current stops flowing through the mechanical breaker 2, after the gas contact 17 of the mechanical breaker 2 completes the path-opening operation, and a sufficient withstand voltage for the transient recovery voltage at the time of blocking an accident is secured, the non-illustrated controller blocks the current flowing through the semiconductor breaker 3 by giving the command to turn off (blocking state) the IGBTs 35 to the auxiliary circuit 32 of the semiconductor breaker 3 of the direct-current interrupting device 1.

The operations following this are performed in the same manner as the first embodiment.

### [2-3. Advantageous effects]

The direct-current interrupting device in the second embodiment as above has advantageous effects similar to the first embodiment.

### <Other Embodiments>

While a plurality of embodiments of the present invention are explained in this specification, these embodiments are presented as examples, and not intended to limit the scope of the present invention. Specifically, the combination of the first and second embodiments is encompassed. Such embodiments may be executed in a variety of other forms; furthermore, various omissions, substitutions and changes in the form of the embodiments may be made within the scope of the present invention. These embodiments and their variations are included in the scope of the inventions recited in the claims and their equivalents, as well as being included in the scope or spirit of the present invention.

For example, the embodiments given below are also included in the scope of the present invention.
(1) In the first and second embodiments, a shield for relieving an electric field is not attached to the direct-current interrupting device 1. However, a shield for relieving an electric field may be attached to an electric filed concentration portion such as the semiconductor breaker 3, the surge arrester 39, and the bushing 8.
(2) In the first and second embodiments, the mechanical breaker 2 is configured by encapsulating the gas contact 17 and the vacuum interrupter 18 in one pressure vessel 5, and connecting them in series in the pressure vessel 5. However, the mechanical breaker 2 is not limited to this, and may be also configured by encapsulating each of the gas contact 17 and the vacuum interrupter 18 in a different pressure vessel 5. At this time, the gas contact 17 and the vacuum interrupter 18 may be connected in series via the bushing 8 connected to a different pressure vessel 5. Alternatively, the gap between different pressure vessels 5 may be connected by the metal tank 9, and the gas contact 17 and the vacuum interrupter 18 may be connected in series by the conductor 16.

When the gap between different pressure vessels 5 are connected by the metal tank 9 in the second embodiment, it is possible to connect the bushing 8 to the metal tank 9 that connects the gap between different pressure vessels 5, and derive from the bushing 8 the connection point of the gas contact 17 and the vacuum interrupter 18.

### Reference Signs List

1... Direct-current interrupting device; 2... Mechanical breaker; 3... Semiconductor breaker; 4... Commutation device; 5... Pressure vessel; 6... Mechanical contact; 7... Operation mechanism; 8 and 48... Bushing;9... Metal tank; 10... Fixed leg; 11, 16, 38 and 45... Conductor; 12 and 58... Opening; 13... Connecting unit; 14... Foundation; 15... Insulating medium; 17... Gas contact; 18... Vacuum interrupter; 19... Sliding contact; 20 and 21... Direct-current transmission line; 22... Insulating rod; 23... Seal rod; 24... Fixed contact; 25... Movable contact; 26... Semiconductor module; 27... Module supporting plate; 28... Surge arrester unit; 29 and 30... Insulating pole; 31... Semiconductor stack; 32... Auxiliary circuit; 33... Storage vessel; 34... Insulation supporting unit; 35 and 42... IGBT; 36, 37, 44, 51-54, 56 and 57... Terminal; 39... Surge arrester; 40... Commutation circuit module; 41... H-bridge circuit; 43... Capacitor; 46... Building; 47... Wall surface of building; 49... Diode; 55... Commutation adjustment reactor

## Claims

1. A direct-current interrupting device comprising: a mechanical breaker (2); wherein the mechanical breaker (2) comprises: a mechanical contact (6) made by connecting at least one high-voltage contact and at least one current interrupting contact in series; a cylindrical pressure vessel (5) ; and bushings (8) connected to the pressure vessel (5),
the pressure vessel (5) encapsulates the mechanical contact (6) in its inside and is equipotential to a ground potential,
the bushings (8) withdraw conductors (11) from both ends of the mechanical contact (6) to an outside of the pressure vessel (5), and connect each of the conductors (11) to a direct-current transmission system, **characterized in that**: the direct-current interrupting device comprises a semiconductor breaker (3); and a commutation device (4), wherein the semiconductor breaker (3) comprises: semiconductor modules (26); module supporting plates (27); and insulating poles (29),
the semiconductor module (26) comprises: a semiconductor stack (31) made by layering two or more self-excited semiconductor elements (35) in line and connecting them in series; an auxiliary circuit (32) of the semiconductor stack (31); and an insulation supporting unit (34),
the insulation supporting unit (34) electrically insulates the semiconductor stack (31) and the auxiliary circuit (32) against the module supporting plate (27), and mechanically connects the semiconductor stack (31) and the auxiliary circuit (32) to the module supporting plate (27),
the insulating pole (29) mechanically supports or fixes the module supporting plate (27),
the semiconductor breaker (3) is connected to the mechanical breaker (2) in parallel,
the commutation device (4) is connected to at least the high-voltage contact of the high-voltage contact and the current interrupting contact of the mechanical breaker (2) in parallel, and is connected to the semiconductor breaker (3) in series,
at a time of regular power transmission of the direct-current transmission system, transmission current only flows through the mechanical breaker (2),
when accident current occurs in the direct-current transmission system, a path between the high-voltage contact and the current interrupting contact of the mechanical breaker (2) is opened to make the self-excited semiconductor elements (35) of the semiconductor breaker (3) in a current-carrying state, and to make current flowing through the current interrupting contact temporarily zero by the commutation device (4), thereby transferring the accident current from the mechanical breaker (2) to the semiconductor breaker (3), and
the self-excited semiconductor elements (35) of the semiconductor breaker (3) are made in a blocking state after the accident current is transferred, thereby blocking the accident current of the direct-current transmission system.

2. The direct-current interrupting device of claim 1, **characterized in that** the commutation device (4) is connected to both the high-voltage contact and the current interrupting contact of the mechanical breaker (2) in parallel.

3. The direct-current interrupting device of claim 1, **characterized in that**:
a commutation adjustment reactor (55) is connected between a connection point of the semiconductor breaker (3) and the commutation device (4) and a connection point of the current interrupting contact and the direct-current transmission system, and
the commutation device (4) is connected between a connection point of the high-voltage contact and the current interrupting contact of the mechanical breaker (2) and a connection point of the semiconductor breaker (3) and the commutation adjustment reactor (55).

4. The direct-current interrupting device of any of claims 1 to 3, **characterized in that** the high-voltage contact is a gas contact (17), and the current interrupting contact is a vacuum interrupter (18).

5. The direct-current interrupting device of any of claims 1 to 4, **characterized in that**:
the commutation device (4) comprises: a commutation circuit module (40); a module supporting plate (27) of the commutation device (4); and an insulating pole (29),
the commutation circuit module (40) comprises: a half-bridge circuit (41) configured by connecting two legs made by connecting two self-excited semiconductor elements (42) in series, and a capacitor (43) in parallel; and the insulation supporting unit (34) that electrically insulates the half-bridge circuit (41) against the module supporting plate (27) of the commutation device (4), and mechanically connects the half-bridge circuit (41) to the module supporting plate (27) of the commutation device (4),
the commutation circuit module (40) is configured by connecting one or more of the half-bridge circuit(s) (41) in series, and
the insulating pole (29) of the commutation device (4) mechanically fixes the module supporting plate (27) of the commutation device (4).

6. The direct-current interrupting device of claim 5, **characterized in that** the insulating pole (29) of the semiconductor breaker (3) and the insulating pole (29) of the commutation device (4) are shared.

7. The direct-current interrupting device of any of claims 1 to 6, **characterized in that**:
the semiconductor breaker (3) is disposed by layering two or more stages of the semiconductor module (26) and the module supporting plate (27) of the semiconductor breaker (3) with respect to the insulating pole (29) of the semiconductor breaker (3), and
the plurality of semiconductor modules (26) are connected in series.

8. The direct-current interrupting device of any of claims 1 to 7, further comprising a surge arrester unit (28) configured by axially layering at least one surge arrester (39) on an insulating pole (30) and connecting them in series, **characterized in that** the surge arresters (39) are connected to the semiconductor module (26) in parallel.

9. The direct-current interrupting device of any of claims 1 to 8, **characterized in that** an angle of the bushing (8) of the mechanical breaker (2) is inclined with respect to a vertical direction of a setting area of the device.

10. The direct-current interrupting device of any of claims 1 to 9, **characterized in that** the mechanical breaker (2) is disposed on a side surface whose area is wider among side surfaces of the semiconductor breaker (3) so that the wider side surface and an axial direction of the pressure vessel (5) are in parallel.

11. The direct-current interrupting device of any of claims 1 to 10, **characterized by** comprising a shield for relieving an electric field attached to an electric field concentration portion existing in the semiconductor breaker (3) or the bushing (8).

12. A method for controlling a direct-current interrupting device, wherein:
the direct-current interrupting device comprises: a mechanical breaker (2) ;
the mechanical breaker (2) comprises: a mechanical contact (6) made by connecting at least one high-voltage contact and at least one current interrupting contact in series; a cylindrical pressure vessel (5); and
bushings (8) connected to the pressure vessel (5),
the pressure vessel (5) encapsulates the mechanical contact (6) in its inside and is equipotential to a ground potential,
the bushings (8) withdraw conductors (11) from both ends of the mechanical contact (6) to an outside of the pressure vessel (5), and connect each of the conductors (11) to a direct-current transmission system, **characterized in that**: the direct-current interrupting device comprises a semiconductor breaker (3); and a commutation device (4), wherein
the semiconductor breaker (3) comprises: semiconductor modules (26); module supporting plates (27); and insulating poles (29),
the semiconductor module (26) comprises: a semiconductor stack (31) made by layering two or more self-excited semiconductor elements (35) in line and connecting them in series; an auxiliary circuit (32) of the semiconductor stack (31); and an insulation supporting unit (34),
the insulation supporting unit (34) electrically insulates the semiconductor stack (31) and the auxiliary circuit (32) against the module supporting plate (27), and mechanically connects the semiconductor stack (31) and the auxiliary circuit (32) to the module supporting plate (27),
the insulating pole (29) mechanically supports or fixes the module supporting plate (27),
the semiconductor breaker (3) is connected to the mechanical breaker (2) in parallel,
the commutation device (4) is connected to at least the high-voltage contact of the high-voltage contact and the current interrupting contact of the mechanical breaker (2) in parallel, and is connected to the semiconductor breaker (3) in series, the method **characterized by** comprising:
when an accident current occurs in the direct-current transmission system, opening a path of the high-voltage contact and the current interrupting contact to make the self-excited semiconductor elements (35) of the semiconductor breaker (3) in a current-carrying state, and to make the current flowing through the current interrupting contact temporarily zero by the commutation device (4), thereby transferring the accident current from the mechanical breaker (2) to the semiconductor breaker (3), and
making the self-excited semiconductor elements (35) of the semiconductor breaker (3) in a blocking state after the accident current is transferred, thereby blocking the accident current of the direct-current transmission system.

## Patentansprüche

1. Gleichstromunterbrechungsvorrichtung, die Folgendes umfasst: einen mechanischen Schutzschalter (2); wobei
der mechanische Schutzschalter (2) Folgendes umfasst: einen mechanischen Kontakt (6), der durch In-Reihe-Schalten von mindestens einem Hochspannungskontakt und mindestens einem Stromunterbrechungskontakt hergestellt wird; einen zylindrischen Druckbehälter (5); und Buchsen (8), die mit dem Druckbehälter (5) verbunden sind
wobei der Druckbehälter (5) den mechanischen Kontakt (6) in seinem Inneren einkapselt und äquipotentiell zu einem Erdpotenzial ist,
die Buchsen (8) Leiter (11) von beiden Enden des mechanischen Kontakts (6) zu einer Außenseite des Druckbehälters (5) zurückziehen und jeden von den Leitern (11) mit einem Gleichstromübertragungssystem verbinden, **dadurch gekennzeichnet, dass**: die Gleichstromunterbrechungsvorrichtung einen Halbleiter-Schutzschalter (3); und eine Kommutierungsvorrichtung (4) umfasst,
wobei der Halbleiter-Schutzschalter (3) Folgendes umfasst: Halbleitermodule (26); Modulstützplatten (27) und Isolierstangen (29),
wobei das Halbleitermodul (26) Folgendes umfasst: einen Halbleiterstapel (31), der durch Schichten von zwei oder mehr selbsterregten Halbleiterelementen (35) in einer Richtung und ihr In-Reihe-Schalten hergestellt ist; eine Hilfsschaltung (32) des Halbleiterstapels (31); und eine Isolierstützeinheit (34),
wobei die Isolierstützeinheit (34) den Halbleiterstapel (31) und die Hilfsschaltung (32) gegen die Modulstützplatte (27) elektrisch isoliert, und den Halbleiterstapel (31) und die Hilfsschaltung (32) mechanisch mit der Modulstützplatte (27) verbindet,
die Isolierstange (29) die Modulstützplatte (27) mechanisch stützt oder fixiert,
der Halbleiter-Schutzschalter (3) mit dem mechanischen Schutzschalter (2) parallelgeschaltet ist,
die Kommutierungsvorrichtung (4) mit mindestens dem Hochspannungskontakt von dem Hochspannungskontakt und dem Stromunterbrechungskontakt des mechanischen Schutzschalters (2) parallelgeschaltet ist und mit dem Halbleiter-Schutzschalter (3) in Reihe geschaltet ist,
an einem Zeitpunkt der normalen Leistungsübertragung des Gleichstromübertragungssystems Übertragungsstrom nur durch den mechanischen Schutzschalter (2) fließt,
wenn ein Unfallstrom in dem Gleichstromübertragungssystem auftritt, ein Pfad zwischen dem Hochspannungskontakt und dem Stromunterbrechungskontakt des mechanischen Schutzschalters (2) geöffnet wird, um die selbsterregten Halbleiterelemente (35) des Halbleiter-Schutzschalters (3) in einen stromführenden Zustand zu versetzen und Strom, der durch den Stromunterbrechungskontakt fließt, durch die Kommutierungsvorrichtung (4) zeitweilig gleich Null zu machen, wodurch der Unfallstrom von dem mechanischen Schutzschalter (2) zu dem Halbleiter-Schutzschalter (3) übertragen wird, und
die selbsterregten Halbleiterelemente (35) des Halbleiter-Schutzschalters (3) in einen Sperrzustand versetzt werden, nachdem der Unfallstrom übertragen wurde, wodurch der Unfallstrom des Gleichstromübertragungssystems gesperrt wird.

2. Gleichstromunterbrechungsvorrichtung nach Anspruch 1, **dadurch gekennzeichnet, dass** die Kommutierungsvorrichtung (4) mit sowohl dem Hochspannungskontakt als auch dem Stromunterbrechungskontakt des mechanischen Schutzschalters (2) parallelgeschaltet ist.

3. Gleichstromunterbrechungsvorrichtung nach Anspruch 1, **dadurch gekennzeichnet, dass**:
eine Kommutierungsanpassungsdrossel (55) zwischen einem Verbindungspunkt des Halbleiter-Schutzschalters (3) und der Kommutierungsvorrichtung (4) und einem Verbindungspunkt des Stromunterbrechungskontakts und des Gleichstromübertragungssystems verbunden ist, und
die Kommutierungsvorrichtung (4) zwischen einem Verbindungspunkt des Hochspannungskontakts und des Stromunterbrechungskontakts des mechanischen Schutzschalters (2) und einem Verbindungspunkt des Halbleiter-Schutzschalters (3) und der Kommutierungsanpassungsdrossel (55) verbunden ist.

4. Gleichstromunterbrechungsvorrichtung nach einem der Ansprüche 1 bis 3, **dadurch gekennzeichnet, dass** der Hochspannungskontakt ein Gaskontakt (17) ist und der Stromunterbrechungskontakt ein Vakuum-Trennschalter (18) ist.

5. Gleichstromunterbrechungsvorrichtung nach einem der Ansprüche 1 bis 4, **dadurch gekennzeichnet, dass**:
die Kommutierungsvorrichtung (4) Folgendes umfasst: ein Kommutierungsschaltungsmodul (40); eine Modulstützplatte (27) der Kommutierungsvorrichtung (4); und eine Isolierstange (29),
das Kommutierungsschaltungsmodul (40) Folgendes umfasst: eine Halbbrückenschaltung (41), die durch Parallelschalten von zwei Zweigen, die durch In-Reihe-Schalten von zwei selbsterregten Halbleiterelementen (42) hergestellt sind, und eines Kondensators (43) ausgestaltet ist; und die Isolierstützeinheit (34), die die Halbbrückenschaltung (41) elektrisch gegen die Modulstützplatte (27) der Kommutierungsvorrichtung (4) isoliert und die Halbbrückenschaltung (41) mechanisch mit der Modulstützplatte (27) der Kommutierungsvorrichtung (4) verbindet,
das Kommutierungsschaltungsmodul (40) durch In-Reihe-Schalten von einer oder mehreren von den Halbbrückenschaltung/en (41) ausgestaltet ist, und
die Isolierstange (29) der Kommutierungsvorrichtung (4) die Modulstützplatte (27) der Kommutierungsvorrichtung (4) mechanisch fixiert.

6. Gleichstromunterbrechungsvorrichtung nach Anspruch 5, **dadurch gekennzeichnet, dass** die Isolierstange (29) des Halbleiter-Schutzschalters (3) und die Isolierstange (29) der Kommutierungsvorrichtung (4) gemeinsam verwendet werden.

7. Gleichstromunterbrechungsvorrichtung nach einem der Ansprüche 1 bis 6, **dadurch gekennzeichnet, dass**:
der Halbleiter-Schutzschalter (3) durch Schichten von zwei oder mehr Stufen des Halbleitermoduls (26) und der Modulstützplatte (27) des Halbleiter-Schutzschalters (3) in Bezug zu der Isolierstange (29) des Halbleiter-Schutzschalters (3) angeordnet ist, und
die mehreren Halbleitermodule (26) in Reihe geschaltet sind.

8. Gleichstromunterbrechungsvorrichtung nach einem der Ansprüche 1 bis 7, die ferner eine Überspannungsableitereinheit (28) umfasst, die durch axiales Schichten von mindestens einem Überspannungsableiter (39) auf einer Isolierstange (30) und deren In-Reihe-Schalten ausgestaltet ist, **dadurch gekennzeichnet, dass** die Überspannungsableiter (39) mit dem Halbleitermodul (26) parallelgeschaltet sind.

9. Gleichstromunterbrechungsvorrichtung nach einem der Ansprüche 1 bis 8, **dadurch gekennzeichnet, dass** ein Winkel der Buchse (8) des mechanischen Schutzschalters (2) in Bezug zu einer vertikalen Richtung eines Einstellungsbereichs der Vorrichtung geneigt ist.

10. Gleichstromunterbrechungsvorrichtung nach einem der Ansprüche 1 bis 9, **dadurch gekennzeichnet, dass** der mechanische Schutzschalter (2) auf einer Seitenfläche angeordnet ist, deren Oberfläche unter Seitenflächen des Halbleiter-Schutzschalters (3) breiter ist, derart dass die breitere Seitenfläche und eine axiale Richtung des Druckbehälters (5) parallel sind.

11. Gleichstromunterbrechungsvorrichtung nach einem der Ansprüche 1 bis 10, **dadurch gekennzeichnet, dass** sie eine Abschirmung zum Abschwächen eines elektrischen Feldes umfasst, die an einem Konzentrationsabschnitt für ein elektrisches Feld befestigt ist, der in dem Halbleiter-Schutzschalter (3) oder der Buchse (8) vorhanden ist.

12. Verfahren zum Steuern einer Gleichstromunterbrechungsvorrichtung, wobei:
die Gleichstromunterbrechungsvorrichtung Folgendes umfasst: einen mechanischen Schutzschalter (2);
wobei der mechanische Schutzschalter (2) Folgendes umfasst: einen mechanischen Kontakt (6), der durch In-Reihe-Schalten von mindestens einem Hochspannungskontakt und mindestens einem Stromunterbrechungskontakt hergestellt wird; einen zylindrischen Druckbehälter (5); und Buchsen (8), die mit dem Druckbehälter (5), verbunden sind,
wobei der Druckbehälter (5) den mechanischen Kontakt (6) in seinem Inneren einkapselt und äquipotentiell zu einem Erdpotenzial ist,
die Buchsen (8) Leiter (11) von beiden Enden des mechanischen Kontakts (6) zu einer Außenseite des Druckbehälters (5) zurückziehen und jeden von den Leitern (11) mit einem Gleichstromübertragungssystem verbinden, **dadurch gekennzeichnet, dass**: die Gleichstromunterbrechungsvorrichtung einen Halbleiter-Schutzschalter (3); und eine Kommutierungsvorrichtung (4) umfasst,
wobei der Halbleiter-Schutzschalter (3) Folgendes umfasst: Halbleitermodule (26); Modulstützplatten (27); und Isolierstangen (29),
wobei das Halbleitermodul (26) Folgendes umfasst: einen Halbleiterstapel (31), der durch Schichten von zwei oder mehr selbsterregten Halbleiterelementen (35) in einer Richtung und ihr In-Reihe-Schalten hergestellt ist; eine Hilfsschaltung (32) des Halbleiterstapels (31); und eine Isolierstützeinheit (34),
wobei die Isolierstützeinheit (34) den Halbleiterstapel (31) und die Hilfsschaltung (32) gegen die Modulstützplatte (27) elektrisch isoliert und den Halbleiterstapel (31) und die Hilfsschaltung (32) mechanisch mit der Modulstützplatte (27) verbindet,
die Isolierstange (29) die Modulstützplatte (27) mechanisch stützt oder fixiert,
der Halbleiter-Schutzschalter (3) mit dem mechanischen Schutzschalter (2) parallelgeschaltet ist,
die Kommutierungsvorrichtung (4) mit mindestens dem Hochspannungskontakt von dem Hochspannungskontakt und dem Stromunterbrechungskontakt des mechanischen Schutzschalters (2) parallelgeschaltet ist und mit dem Halbleiter-Schutzschalter (3) in Reihe geschaltet ist, wobei das Verfahren **dadurch gekennzeichnet ist, dass** es Folgendes umfasst:
wenn ein Unfallstrom in dem Gleichstromübertragungssystem auftritt, Öffnen eines Pfades des Hochspannungskontakts und des Stromunterbrechungskontakts, um die selbsterregten Halbleiterelemente (35) des Halbleiter-Schutzschalters (3) in einen stromführenden Zustand zu versetzen, und den Strom, der durch den Stromunterbrechungskontakt fließt, durch die Kommutierungsvorrichtung (4) zeitweilig gleich Null zu machen, wodurch der Unfallstrom von dem mechanischen Schutzschalter (2) zu dem Halbleiter-Schutzschalter (3) übertragen wird, und
die selbsterregten Halbleiterelemente (35) des Halbleiter-Schutzschalters (3) in einen Sperrzustand versetzt werden, nachdem der Unfallstrom übertragen wurde, wodurch der Unfallstrom des Gleichstromübertragungssystems gesperrt wird.

## Revendications

1. Dispositif d'interruption de courant continu comprenant un disjoncteur mécanique (2), dans lequel
le disjoncteur mécanique (2) comprend un contact mécanique (6) constitué en connectant au moins un contact de haute tension et au moins un contact d'interruption de courant en série ; un récipient pressurisé cylindrique (5) ; et des bagues (8) connectées au récipient pressurisé (5),
le récipient pressurisé (5) englobe le contact mécanique (6) à l'intérieur de celui-ci et est équipotentiel avec un potentiel de masse,
les bagues (8) retirent des conducteurs (11) des deux extrémités du contact mécanique (6) à un extérieur du récipient pressurisé (5), et connectent chacun des conducteurs (11) à un système de transmission de courant continu, **caractérisé en ce que** le dispositif d'interruption de courant continu comprend un disjoncteur semi-conducteur (3) et un dispositif de commutation (4),
dans lequel le disjoncteur semi-conducteur (3) comprend des modules semi-conducteurs (26), des plaques de support de module (27) et des pôles isolants (29),
le module semi-conducteur (26) comprend une pile semi-conductrice (31) constituée par la stratification d'au moins deux éléments semi-conducteurs auto-excités (35) en ligne et leur connexion en série, un circuit auxiliaire (32) de la pile semi-conductrice (31) et une unité de support d'isolation (34),
l'unité de support d'isolation (34) isole électriquement la pile semi-conductrice (31) et le circuit auxiliaire (32) contre la plaque de support de module (27), et connecte mécaniquement la pile semi-conductrice (31) et le circuit auxiliaire (32) à la plaque de support de module (27),
le pôle isolant (29) supporte ou fixe mécaniquement la plaque de support de module (27),
le disjoncteur semi-conducteur (3) est connecté au disjoncteur mécanique (2) en parallèle,
le dispositif de commutation (4) est connecté au moins au contact de haute tension du contact de haute tension et du contact d'interruption de courant du disjoncteur mécanique (2) en parallèle, et est connecté au disjoncteur semi-conducteur (3) en série,
à un temps de transmission de puissance normale du système de transmission de courant continu, un courant de transmission ne s'écoule qu'à travers le disjoncteur mécanique (2),
lorsqu'un courant d'accident survient dans le système de transmission de courant continu, une voie entre le contact de haute tension et le contact d'interruption de courant du disjoncteur mécanique (2) est ouverte pour mettre les éléments semi-conducteurs auto-excités (35) du disjoncteur semi-conducteur (3) dans un état porteur de courant, et pour mettre le courant s'écoulant à travers le contact d'interruption de courant provisoirement à zéro par le dispositif de commutation (4), en transférant de ce fait le courant d'accident du disjoncteur mécanique (2) au disjoncteur semi-conducteur (3), et
les éléments semi-conducteurs auto-excités (35) du disjoncteur semi-conducteur (3) sont mis dans un état de blocage après le transfert du courant d'accident, en bloquant de ce fait le courant d'accident du système de transmission de courant continu.

2. Dispositif d'interruption de courant continu selon la revendication 1, **caractérisé en ce que** le dispositif de commutation (4) est connecté à la fois au contact de haute tension et au contact d'interruption de courant du disjoncteur mécanique (2) en parallèle.

3. Dispositif d'interruption de courant continu selon la revendication 1, **caractérisé en ce que** :
un réacteur d'ajustement de commutation (55) est connecté entre un point de connexion du disjoncteur semi-conducteur (3) et le dispositif de commutation (4) et un point de connexion du contact d'interruption de courant et du système de transmission de courant continu, et
le dispositif de commutation (4) est connecté entre un point de connexion du contact de haute tension et du contact d'interruption de courant du disjoncteur mécanique (2) et un point de connexion du disjoncteur semi-conducteur (3) et du réacteur d'ajustement de commutation (55).

4. Dispositif d'interruption de courant continu selon l'une quelconque des revendications 1 à 3, **caractérisé en ce que** le contact de haute tension est un contact de gaz (17), et le contact d'interruption de courant est un interrupteur à vide (18).

5. Dispositif d'interruption de courant continu selon l'une quelconque des revendications 1 à 4, **caractérisé en ce que**
le dispositif de commutation (4) comprend un module de circuit de commutation (40), une plaque de support de module (27) du dispositif de commutation (4), et un pôle isolant (29),
le module de circuit de commutation (40) comprend un circuit en demi-pont (41) configuré par la connexion de deux branches constituées par la connexion de deux éléments semi-conducteurs auto-excités (42) en série, et d'un condensateur (43) en parallèle ; et l'unité de support d'isolation (34) qui isole électriquement le circuit en demi-pont (41) contre la plaque de support de module (27) du dispositif de commutation (4), et connecte mécaniquement le circuit en demi-pont (41) à la plaque de support de module (27) du dispositif de commutation (4),
le module de circuit de commutation (40) est configuré par la connexion d'un ou plusieurs des circuits en demi-pont (41) en série, et
le pôle isolant (29) du dispositif de commutation (4) fixe mécaniquement la plaque de support de module (27) du dispositif de commutation (4).

6. Dispositif d'interruption de courant continu selon la revendication 5, **caractérisé en ce que** le pôle isolant (29) du disjoncteur semi-conducteur (3) et le pôle isolant (29) du dispositif de commutation (4) sont partagés.

7. Dispositif d'interruption de courant continu selon l'une quelconque des revendications 1 à 6, **caractérisé en ce que**
le disjoncteur semi-conducteur (3) est disposé par la stratification d'au moins deux étages du module semi-conducteur (26) et de la plaque de support de module (27) du disjoncteur semi-conducteur (3) par rapport au pôle isolant (29) du disjoncteur semi-conducteur (3), et
la pluralité de modules semi-conducteurs (26) sont connectés en série.

8. Dispositif d'interruption de courant continu selon l'une quelconque des revendications 1 à 7, comprenant en outre une unité de limiteur de surtension (28) configurée par la stratification axiale d'au moins un limiteur de surtension (39) sur un pôle isolant (30) et leur connexion en série, **caractérisé en ce que** les limiteurs de surtension (39) sont connectés au module semi-conducteur (26) en parallèle.

9. Dispositif d'interruption de courant continu selon l'une quelconque des revendications 1 à 8, **caractérisé en ce qu'**un angle de la bague (8) du disjoncteur mécanique (2) est incliné par rapport à un sens vertical d'une zone de réglage du dispositif.

10. Dispositif d'interruption de courant continu selon l'une quelconque des revendications 1 à 9, **caractérisé en ce que** le disjoncteur mécanique (2) est disposé sur une surface latérale plus large que des surfaces latérales du disjoncteur semi-conducteur (3) de sorte que la surface latérale plus large et un sens axial du récipient pressurisé (5) soient parallèles.

11. Dispositif d'interruption de courant continu selon l'une quelconque des revendications 1 à 10, **caractérisé en ce qu'**il comprend un bouclier de protection contre un champ électrique attaché à une portion de concentration de champ électrique existant dans le disjoncteur semi-conducteur (3) ou la bague (8).

12. Procédé de commande d'un dispositif d'interruption de courant continu, dans lequel :
le dispositif d'interruption de courant continu comprend un disjoncteur mécanique (2) :
le disjoncteur mécanique (2) comprend un contact mécanique (6) constitué en connectant au moins un contact de haute tension et au moins un contact d'interruption de courant en série ; un récipient pressurisé cylindrique (5) ; et des bagues (8) connectées au récipient pressurisé (5),
le récipient pressurisé (5) englobe le contact mécanique (6) à l'intérieur de celui-ci et est équipotentiel avec un potentiel de masse,
les bagues (8) retirent des conducteurs (11) des deux extrémités du contact mécanique (6) à un extérieur du récipient pressurisé (5), et connectent chacun des conducteurs (11) à un système de transmission de courant continu, **caractérisé en ce que** le dispositif d'interruption de courant continu comprend un disjoncteur semi-conducteur (3) et un dispositif de commutation (4),
dans lequel le disjoncteur semi-conducteur (3) comprend des modules semi-conducteurs (26), des plaques de support de module (27) et des pôles isolants (29),
le module semi-conducteur (26) comprend une pile semi-conductrice (31) constituée par la stratification d'au moins deux éléments semi-conducteurs auto-excités (35) en ligne et leur connexion en série, un circuit auxiliaire (32) de la pile semi-conductrice (31) et une unité de support d'isolation (34),
l'unité de support d'isolation (34) isole électriquement la pile semi-conductrice (31) et le circuit auxiliaire (32) contre la plaque de support de module (27), et connecte mécaniquement la pile semi-conductrice (31) et le circuit auxiliaire (32) à la plaque de support de module (27),
le pôle isolant (29) supporte ou fixe mécaniquement la plaque de support de module (27),
le disjoncteur semi-conducteur (3) est connecté au disjoncteur mécanique (2) en parallèle,
le dispositif de commutation (4) est connecté au moins au contact de haute tension du contact de haute tension et du contact d'interruption de courant du disjoncteur mécanique (2) en parallèle, et est connecté au disjoncteur semi-conducteur (3) en série, le procédé étant **caractérisé en ce qu'**il comprend :
lorsqu'un courant d'accident survient dans le système de transmission de courant continu, l'ouverture d'une voie entre le contact de haute tension et le contact d'interruption de courant pour mettre les éléments semi-conducteurs auto-excités (35) du disjoncteur semi-conducteur (3) dans un état porteur de courant, et pour mettre le courant s'écoulant à travers le contact d'interruption de courant provisoirement à zéro par le dispositif de commutation (4), en transférant de ce fait le courant d'accident du disjoncteur mécanique (2) au disjoncteur semi-conducteur (3), et
la mise des éléments semi-conducteurs auto-excités (35) du disjoncteur semi-conducteur (3) dans un état de blocage après le transfert du courant d'accident, en bloquant de ce fait le courant d'accident du système de transmission de courant continu.
